# EUROPÄISCHE PATENTANMELDUNG

(11) **EP 0 670 434 A1**
(43) Veröffentlichungstag der Anmeldung: **06.09.1995**
(21) Anmeldenummer: 95102602.0
(22) Anmeldetag: 24.02.1995
(51) Int. Cl.: F16D 65/12, F16D 66/02

(54) **Bremsscheibe für Scheibenbremsen von Fahrzeugen**

(30) Priorität: 05.03.1994 DE 9403747 U
(71) Anmelder: BPW Bergische Achsen Kommanditgesellschaft, D-51674 Wiehl (DE)
(72) Erfinder: Flick, Joachim, D-51674 Wiehl (DE)
(74) Vertreter: Stenger, Watzke & Ring Patentanwälte

(57) **Zusammenfassung**

Die Erfindung betrifft eine Bremsscheibe (1) für Scheibenbremsen von Fahrzeugen mit einander gegenüberliegenden, jeweils an einer ringförmigen Reibfläche (1a) der Bremsscheibe (1) angreifenden Bremsklötzen. Um eine Bremsscheibe (1) für Scheibenbremsen von Fahrzeugen zu schaffen, deren Verschleißzustand ohne Meßgeräte visuell festgestellt werden kann, wird mit der Erfindung vorgeschlagen, daß in mindestens einer der beiden Reibflächen (1a) Vertiefungen (2a,2b,2c) mit einer dem maximal zulässigen Verschleiß der Reibfläche (1a) entsprechenden Tiefe ausgebildet sind.

## Beschreibung

Die Erfindung betrifft eine Bremsscheibe für Scheibenbremsen von Fahrzeugen mit einander gegenüberliegenden, jeweils an einer ringförmigen Reibfläche der Bremsscheibe angreifenden Bremsklötzen.

Derartige Bremsscheiben sind bekannt. Um ihren Verschleißzustand festzustellen, ist es erforderlich, die Dicke der Bremsscheiben mit Meßschiebern oder ähnlichem Meßwerkzeug zu vermessen, da Bremsscheiben unterhalb einer vorgegebenen Bremsscheibendicke ausgewechselt werden müssen. Dieses Vermessen der Bremsscheibendicke ist bei montierten Rädern teilweise nicht durchführbar, auf jeden Fall aber sehr umständlich.

Der Erfindung liegt die **Aufgabe** zugrunde, eine Bremsscheibe für Scheibenbremsen von Fahrzeugen zu schaffen, deren Verschleißzustand ohne Meßgeräte visuell festgestellt werden kann.

Die **Lösung** dieser Aufgabenstellung durch die Erfindung ist dadurch gekennzeichnet, daß in mindestens einer der beiden Reibflächen Vertiefungen mit einer dem maximal zulässigen Verschleiß der Reibfläche entsprechenden Tiefe ausgebildet sind.

Durch die erfindungsgemäße Ausbildung derartiger Vertiefungen reicht eine Sichtprüfung der Bremsscheibe zur Beurteilung ihres Verschleißzustandes aus. Diese Sichtprüfung kann auch bei montierten Rädern vorgenommen werden, so daß sich die regelmäßig notwendige Überprüfung der Bremsscheiben erheblich vereinfacht.

Gemäß einem weiteren Merkmal der Erfindung können in beiden Reibflächen der Bremsscheibe einander gegenüberliegende Vertiefungen ausgebildet werden. Auf diese Weise ist es möglich, die auf der nicht direkt von der Außenseite des Fahrzeuges her einsehbaren Reibfläche liegenden Vertiefungen wegen der exakt gegenüberliegenden Anordnung problemlos zu ertasten, so daß beide Reibflächen der Bremsscheibe auf einfache Weise auf ihren Verschleißzustand überprüft werden können.

Bei einer bevorzugten Ausführungsform der Erfindung sind die Vertiefungen in mehreren, jeweils bogenförmig über die Reibfläche verlaufenden Reihen angeordnet. Hierdurch wird eine Schwächung der Bremsscheibe durch die Vertiefungen im Sinne einer Sollbruchlinie vermieden.

Eine besonders einfache Einbringung der Vertiefungen ergibt sich, wenn diese erfindungsgemäß zylindrisch ausgebildet sind. Gemäß einem weiteren Merkmal der Erfindung können die Vertiefungen auch kegelförmig ausgebildet sein. Hierbei ist der jeweilige Durchmesser der Vertiefungen zugleich ein optisches Maß für den Verschleiß; je kleiner der Durchmesser der Vertiefungen ist, um so stärker ist die jeweilige Reibfläche der Bremsscheibe verschlissen. Um die Vertiefungen auch bei einem Zusetzen mit Bremsstaub gut erkennen zu können, können diese erfindungsgemäß langlochartig ausgebildet sein.

Die erfindungsgemäßen Vertiefungen können entweder bei der Herstellung der Bremsscheibe eingegossen werden, sie können auch mechanisch eingebracht werden, so daß sie auf einfache Weise auch nachträglich angebracht werden können.

Auf der Zeichnung sind ein Ausführungsbeispiel der erfindungsgemäßen Bremsscheibe und drei verschiedene Ausführungsmöglichkeiten für die Vertiefungen dargestellt, und zwar zeigen:
- Fig. 1: eine Ansicht einer Bremsscheibe,
- Fig. 2: eine vergrößerte Darstellung der in Fig. 1 durch einen strichpunktierten Kreis gekennzeichneten Vertiefung,
- Fig. 3: einen Schnitt durch die Vertiefung gemäß Fig. 2,
- Fig. 4: eine der Fig. 2 entsprechende Ansicht einer weiteren Ausgestaltungsmöglichkeit der Vertiefungen,
- Fig. 5: einen Schnitt durch die Vertiefung nach Fig. 4,
- Fig. 6: eine weitere, den Fig. 2 und 4 entsprechende Darstellung einer dritten Ausführungsform der Vertiefungen und
- Fig. 7: einen Schnitt durch die Vertiefung nach Fig. 6.

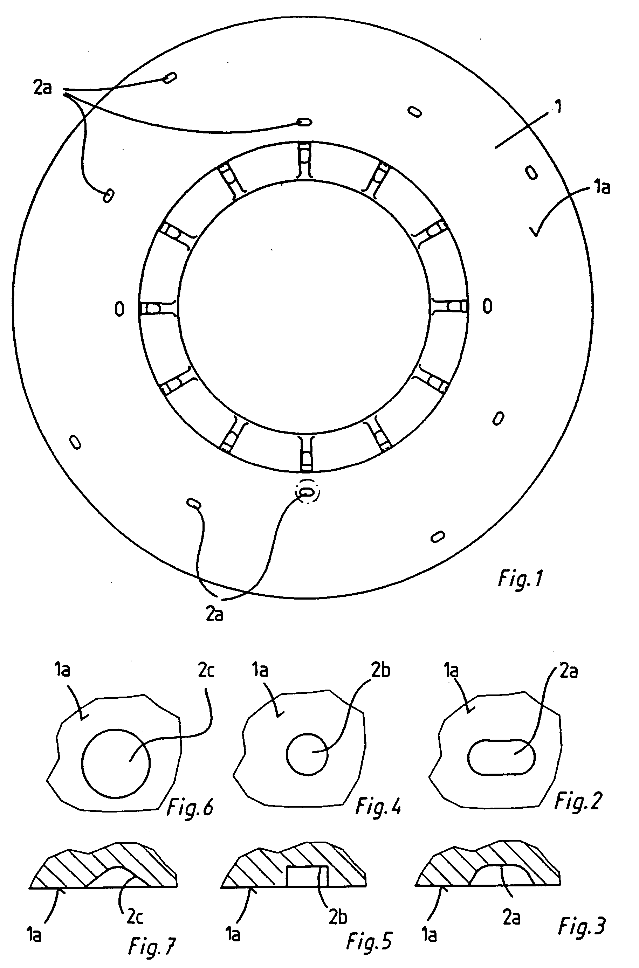

Die in Fig. 1 dargestellte Bremsscheibe 1 ist auf ihren einander gegenüberliegenden Außenseiten jeweils mit einer ringförmigen Reibfläche 1a versehen, an denen auf der Zeichnung nicht dargestellte Bremsklötze angreifen, die einen Verschleiß nicht nur ihrer Bremsbeläge, sondern auch der Reibflächen 1a der Bremsscheibe 1 zur Folge haben.

Um den Verschleißzustand der Bremsscheibe 1 im Bereich ihrer Reibflächen 1a ohne Meßgeräte erkennen zu können, sind in den Reibflächen 1a Vertiefungen 2a,2b,2c angeordnet, deren Tiefe dem maximal zulässigen Verschleiß der jeweiligen Reibfläche 1a entspricht. Beim Ausführungsbeispiel nach Fig. 1 sind die Vertiefungen 2a in mehreren, jeweils bogenförmig über die Reibfläche 1a verlaufenden Reihen angeordnet, so daß die Vertiefungen 2a keine Schwächung der Bremsscheibe 1 im Sinne einer Sollbruchlinie hervorrufen.

Während die Vertiefungen 2a gemäß den Fig. 1,2 und 3 in der Art eines Langloches ausgeführt sind, zeigen die Fig. 4 und 5 die Ausbildung einer zylindrischen Vertiefung 2b. Eine derartige Vertiefung läßt sich auf besonders einfache Weise auch nachträglich in vorhandene Bremsscheiben 1 einbringen.

Die dritte Ausführungsform gemäß den Fig. 6 und 7 zeigt eine kegelförmige Vertiefung 2c, die den Vorteil hat, daß der mit zunehmendem Verschleiß der Reibfläche 1a kleiner werdende Durchmesser der Vertiefung 2c zugleich ein optisches Maß für den Verschleißzustand ist. Selbstverständlich ist es möglich, derartige kegelförmige Vertiefungen 2c nicht nur mit kreisförmiger Grundform, sondern auch mit länglicher Grundform auszubilden.

### Bezugszeichenliste:

- 1: Bremsscheibe
- 1a: Reibfläche
- 2a: Vertiefung
- 2b: Vertiefung
- 2c: Vertiefung

## Patentansprüche

1. Bremsscheibe für Scheibenbremsen von Fahrzeugen mit einander gegenüberliegenden, jeweils an einer ringförmigen Reibfläche der Bremsscheibe angreifenden Bremsklötzen,
**dadurch gekennzeichnet,**
daß in mindestens einer der beiden Reibflächen (1a) Vertiefungen (2a,2b,2c) mit einer dem maximal zulässigen Verschleiß der Reibfläche (1a) entsprechenden Tiefe ausgebildet sind.

2. Bremsscheibe nach Anspruch 1, dadurch gekennzeichnet, daß in beiden Reibflächen (1a) einander gegenüberliegende Vertiefungen (2a,2b,2c) ausgebildet sind.

3. Bremsscheibe nach Anspruch 1 oder 2, dadurch gekennzeichnet, daß die Vertiefungen (2a,2b,2c) in mehreren, jeweils bogenförmig über die Reibfläche (1a) verlaufenden Reihen angeordnet sind.

4. Bremsscheibe nach mindestens einem der Ansprüche 1 bis 3, dadurch gekennzeichnet, daß die Vertiefungen (2b) zylindrisch ausgebildet sind.

5. Bremsscheibe nach mindestens einem der Ansprüche 1 bis 3, dadurch gekennzeichnet, daß die Vertiefungen (2c) kegelförmig ausgebildet sind.

6. Bremsscheibe nach mindestens einem der Ansprüche 1 bis 3, dadurch gekennzeichnet, daß die Vertiefungen (2a) langlochartig ausgebildet sind.

7. Bremsscheibe nach mindestens einem der Ansprüche 1 bis 6, dadurch gekennzeichnet, daß die Vertiefungen (2a,2b,2c) eingegossen sind.

8. Bremsscheibe nach mindestens einem der Ansprüche 1 bis 6, dadurch gekennzeichnet, daß die Vertiefungen (2a,2b,2c) mechanisch eingebracht sind.
